# EUROPÄISCHE PATENTSCHRIFT

(11) **EP 0 586 977 B1**
(45) Veröffentlichungstag und Bekanntmachung des Hinweises auf die Patenterteilung: **18.12.1996**
(21) Anmeldenummer: 93113680.8
(22) Anmeldetag: 26.08.1993
(51) Int. Cl.: E01H 1/08, A01D 34/70

(54) **Sammelbehälter für Abfallgut von Strassen- und Rasenpflegegeräten**
Collecting box for waste material of road or lawn sweepers
Récipient collecteur pour déchets d'appareils destinés au soin des routes et du gazon

(30) Priorität: 27.08.1992 DE 4228574
(43) Veröffentlichungstag der Anmeldung: 16.03.1994
(73) Patentinhaber: WIEDENMANN GMBH, D-89192 Rammingen (DE)
(72) Erfinder:
(74) Vertreter: Flügel, Otto, Dipl.-Ing.

(56) Entgegenhaltungen:
- DE-A- 2 030 150
- DE-A- 2 947 899
- US-A- 4 761 943

## Beschreibung

Die Erfindung betrifft einen Sammelbehälter für Mäh-, Kehr- oder dergleichen durch ein Sauggebläse dem Behälterinneren zugeführtes Gut, gemäß der Oberbegriff des Anspruchs 1.

Solche Sammelbehälter wie z. B. durch die US-A-4 761 943 bekannt geworden werden mit den Geräten, die das aufzunehmende Gut absondern, mitgeführt, sei es als Bestandteil eines entsprechenden Fahrzeugs, insbesondere aber als auf- und abmontierbares Aufsattelgerät oder ein- oder mehrachsiger Anhänger. Das aufzunehmende Gut wird in den Innenraum dieser Behälter mit Hilfe eines Sauggeblässes gefördert, dessen Blasausgang in den Behälterinnenraum mündet. Die durch diesen Blasausgang angeförderte Luft führt das aufzunehmende Abfallgut mit sich, das dem Sauggebläse über dessen Saugeingang zugeführt wird, der vielfach über eine schlauchförmige Leitung an das Gerät angeschlossen ist, daß das Abfallgut aufnimmt - Mähgerät, Kehrgerät, Laubsauger und dergleichen. Die durch das Sauggebläse in den Behälterinnenraum zugeführte Luft muß aus diesem wieder entweichen können, während das zugeführte Abfallgut im Behälterinneren verbleiben und angesammelt werden soll. Zu diesem Zwecke ist der Behälter mit einem Auslaß für die eingeblasene Luft versehen, der für das Zurückhalten des Abfallgutes eine oder mehrere siebförmige Abdeckungen aufweist.

Im Sinne einer möglichst guten Füllung sind diese Abdeckungen im rückseitigen Wandungsbereich des Behälters vorgesehen, wodurch auch die durch die Abdeckungen austretende staubhaltige Luft in Fahrtrichtung nach hinten abgeblasen wird, so daß der Fahrer des den Behälter mitführenden Fahrzeugs durch diese staubhaltige Abluft möglichst wenig behelligt wird. Gerade diese Anordnung der Abdeckung führt aber bei Befüllung des Behälters in gewünschter Weise von der Rückfront her anwachsend zu einem verhältnismäßig frühen Anwachsen über diese siebförmige Abdeckung wodurch der Strömungswiderstand für die austretende Luft entsprechend anwächst und eine vollständige Behälterfüllung in Frage gestellt ist. Jedenfalls wird durch die dadurch eingeschränkte Saugleistung des Sauggeblässes eine Verstopfung im Förderkanalbereich des das Abfallgut mitführenden Luftstromes begünstigt und für den Bediener und regelmäßig Fahrer des Fahrzeugs eine vollständige Füllung des Behälterinnenraumes vorgetäuscht.

Der Erfindung liegt die Aufgabe zugrunde, eine möglichst gute Behälterfüllung durch eine modifizierte Entlüftung des Behälterinnenraumes zu ermöglichen, die den Bediener möglichst wenig beeinträchtigt und zugleich eine Überwachung des Behälterfüllzustandes erlaubt.

Ausgehend von einem Sammelbehälter der eingangs genannten Art wird diese Aufgabe erfindungsgemäß dadurch gelöst, daß der Auslaß eine die nach oben weisende Behälterwandung durchbrechende siebförmige Abdeckung umfaßt, und ferner eine im Bereich der Rückwandung des Behältes befindliche Siebabdeckung.

Die in der nach oben weisenden Behälterwandung diese durchbrechend vorgesehene siebförmige Abdeckung, die gegebenenfalls zusätzlich zu einer insbesondere im Bereich der Rückwandung des Behälters befindlichen Siebabdeckung angeordnet ist, hat im Zusammenspiel mit dem ihr zugeordneten Deckel, der um eine im fahrzeugseitigen Randbereich senkrecht zur Fahrtrichtung verlaufend angeordnete Schwenkachse frei drehbar ist, mehrere Funktionen, die beispielsweise bei einer starren, haubenförmigen Ausbildung eines über dieser Abdeckung angeordneten Luftleiteinrichtung für das Abblasen der staubbelasteten Luft nach hinten nicht erreicht würden: Der Deckel, der unter seinem Eigengewicht in die Absenklage etwa parallel zu der oberhalb der nach oben hin weisenden Abdeckung verschwenkt, wird durch die in den Behälter eingeblasene Luft je nach deren Druck bzw. Menge mehr oder weniger von dieser Abdeckung verschwenkend abgehoben, so daß die Luft entweichen kann, und zwar aufgrund der Schwenkachsanordnung in Fahrtrückwärtsrichtung, weshalb die staubhaltige Luft den in Fahrtrichtung weiter vorn sitzenden Fahrer nicht erreicht. Im Gegensatz zu einer starren Haubenausbildung öffnet der Deckel jedoch den Austrittsquerschnitt für die Luft in Abhängigkeit von deren Druck, wodurch gewährleistet wird, daß vor allem bei einer zusätzlichen Siebabdeckung im Rückwandbereich eine gute Behälterfüllung erreicht wird. Erst nach Befüllen des rückwärtigen Behälterinnenraumes bzw. des von der dem Behälter zugeordneten Falle umgriffenen Volumens baut sich der dem Deckel anhebende Luftdruck auf. Füllt sich dann der Behälter weiter bis hin zu seinem maximalen Aufnahmevermögen, dann verringert sich der Luftdruck auf den Deckel, so daß sich dieser senkt und damit optisch den Füllzustand anzeigt. Ist wegen der Betriebsdauer oder der Menge des aufgenommenen Abfallgutes mit einer Behälterfüllung noch nicht zu rechnen, so zeigt das Absinken des Deckels insoweit auch eine Verstopfung im Förderkanal bzw. im Sauggebläse an.

Durch die Wechselwirkung der nach oben weisenden Öffnung und der beansprachten Siebabdeckung in der Rückwand, die während des Füllvorganges durch das Gut verschlossen wird, ergibt sich nun ein spezieller Entlüftungsverlauf.

Um die sich letztlich in einem abnehmenden Luftdruck unterhalb des Deckels und damit dessen Schwenkstellung bestimmenden Verhältnisse anzuzeigen bzw. besser beobachtbar zu machen, ist dem Deckel ein Peilstab zugeordnet, der vorzugsweise in Längsmitte vom Fahrer aus gesehen hinter der der Schwenkachse abgewandten Kante des Deckels angeordnet ist. Aus Gründen einer Maximierung des Verhältnisses von Aufnahmevermögen zu Länge und Breite des Behälters wird man diesen so hoch wie möglich ausbilden, nämlich gerade so hoch, daß der Fahrer von seinem Fahrzeugsitz aus über die obere Behälterwandung hinweg nach rückwärts blicken kann, was für die Bewegung und Manövrierfähigkeit des Fahrzeugs von Bedeutung ist. Eine starre Haube für die Ableitung der durch die obere Behälterwandung austretenden Luft nach hinten würde diese rückwärtige Sicht ständig beeinträchtigen, also auch vor in Betriebnahme des Sauggeblässes und nach Füllung des Behälters. Der schwenkbare Deckel schmiegt sich in diesen Betriebssituation weitgehend an die Oberfläche der oberen Behälterwandung an. Da durch den aufschwenkenden Deckel die dadurch aus der oberen Abdeckung austretende Luft nach rückwärts abgeleitet wird, kann der Fahrer während des Befüllvorganges des Behälters insoweit durch staubhaltige Luft unbelästigt die Verschwenkstellung des Deckels beobachten, so daß diese beide Funktionen des Deckels einander bedingen.

In bevorzugter Ausführung verschließt der Deckel in seiner abgesenkten Lage die obere siebförmige Abdeckung nicht vollständig, sondern läßt eine Restöffnung frei, die wiederum bevorzugt dadurch gebildet ist, daß der Deckel in seinen senkrecht zur Schwenkachse verlaufenden Seitenbereichen Stützkörper aufweist, so daß die der Schwenkachse abgewandte Kante des Deckels mit der benachbarten Oberfläche der oberen Behälterwandung eine schlitzförmige Öffnung einschließt, wenn sich der Deckel in seiner Absenklage befindet. Wiederum in bevorzugter Ausführung sind die Stützkörper als sich parallel zur Fahrtrichtung erstreckende Streifen ausgebildet, die die Seitenbereiche zwischen Deckel und oberer Behälterwandung abdecken, so daß praktisch nur die vorerwähnte schlitzartige Öffnung als Restöffnung verbleibt.

Die Stützkörper sind vorzugsweise aus Dämm-material wie beispielsweise Gummi oder ähnlich elastische Stoffe ausgebildet, so daß der in die Absenklage verschwenkende Deckel keine Schlaggeräusche verursacht.

Der schlitzförmigen Restöffnung gegenüberliegend kann ein Querholm an der oberen Behälterwandung derart beabstandet angeordnet sein , daß das aus der Restöffnung austretende Luft durch den Querholm eine Aufstauung erfährt, wodurch die Anfangsphase der Deckelaufschwenkung begünstigt wird.

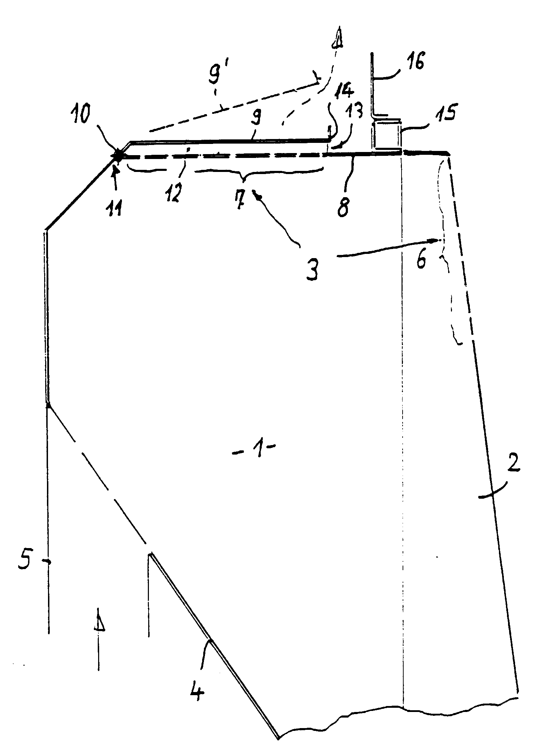

Diese und weitere bevorzugte Ausführungen der Erfindung ergeben sich aus den Unteransprüchen, insbesondere unter Bezugnahme auf das in der Zeichnung wiedergegebene Ausführungsbeispiel, dessen nachfolgende Beschreibung die Erfindung näher erläutert.

Die Figur zeigt eine nur hinsichtlich des interessierenden Bereiches wiedergegebene schematische Längsschnittansicht durch einen Behälter gemäß Ausführungsbeispiel, wobei die Schnittebene in Gebrauchsstellung vertikal gerichtet ist und in Fahrtrichtung verläuft.

Der mit 1 bezeichnete Behälter weist in seinem in Fahrtrichtung rückwärtigen Bereich eine sogenannte Falle 2 auf, die den rückwärtigen Behälterinnenraum umfaßt und insoweit als Teil des Behälters 1 anzusehen ist. Die Falle ist in nicht näher dargestellter Weise um eine im oberen Behälterbereich angeordnete, senkrecht zur Fahrtrichtung verlaufende horizontale Achse zwischen einer Schließstellung und einer Öffnungsstellung verschwenkbar, in welch letzterer der Behälter in bekannter Weise entleerbar ist. Im Rückwandbereich der Falle und in der oberen Behälterwandung ist ein insgesamt mit 3 bezeichneter Auslaß für die Luft ausgebildet, die durch einen im Bereich eines in Fahrtrichtung schräg ansteigend ausgebildeten Behälterwandungsabschnittes 4 in das Behälterinnere mündenden Stutzens 5 zugeführt wird, der an den Blasausgang eines nicht dargestellten Sauggeblässes angeschlossen, daß sich in aller Regel in starrer Zuordnung zu dem Behälter befindet und von der Maschine des Zug- oder allgemeiner Pflegefahrzeugs - gegebenenfalls über eine Zapfwelle - angetrieben wird.

Der Auslaß 3 für die in den Behälter bei 5 unter Mitführen von Abfallgut eingeblasene Luft setzt sich aus einer siebförmigen rückseitigen Abdeckung 6 in der Fallenrückwandung und aus einer weiteren siebförmigen Abdeckung 7 zusammen, die sich in der oberen Behälterwandung 8 befindet. Diese Abdeckungen aus gelochten Blechen können an entsprechende Öffnungen der Behälter- bzw. Fallenwandung angeschlossene Einzelelemente sein, sie können grundsätzlich auch in einer siebförmigen Durchbrechung der Wandungen selbst bestehen. Der siebförmigen Abdeckung 7 in der oberen Behälterwandung 8 ist ein Deckel 9 zugeordnet, der außenseitig der Behälterwandung 8 verschwenkbar ist, und zwar um eine Schwenkachse 10, die in dem dem Fahrzeug bzw. Fahrersitz - nicht dargestellt - zugewandten Randbereich 11 der Abdeckung 7 gehalten ist. Die Schwenkachse kann auch an die obere Behälterwandung 8 überragenden Lagerböcken gehalten sein, der Deckel hat dann eine solche Formgebung, daß er in der mit durchgezogenen Strichen wiedergegebenen Absenklage bis hin zu einer gestrichelt wiedergegebenen Aufschwenklage 9' zum Fahrzeug hin mehr oder weniger an der oberen Behälterwandung 8 abschließt.

Der Deckel ist in seinen beiden etwa parallel zur Fahrtrichtung verlaufenden Seitenbereichen mit streifenförmigen, elastischen Stützkörper 12 versehen, die als Schlagdämpfer des in die Absenkstellung abfallenden Deckels 9 dienen, den Deckel 9 soweit von der oberen Behälterwandung 8 in der Absenkstellung beabstandet halten, daß zwischen der der Schwenkachse 10 abgewandten und zu dieser etwa parallelen Kante 14 des Deckels 9 und dem dem benachbarten Randbereich der Abdeckung 7 eine schlitzförmige Restöffnung 13 freibleibt. Dieser Restöffnung 13 mit verhältnismäßig geringem Abstand gegenüberliegend ist ein parallel zur Kante 14 verlaufender Querholm 15 vorgesehen, gegen den aus der Restöffnung 13 austretende Luft sich stauend anströmt, so daß die Anfangsphase eines Aufwärtsverschwenkens des Deckels 9 unter sich aufbauendem Luftdruck im Behälterinneren erleichtert wird.

Etwa im Mittelbereich des Querholmes 15 ist ein nach oben abragender Peilstab 16 angeordnet, der somit aus der Blickrichtung des Fahrers mehr oder weniger lang sichtbar wird, je nach dem er von der mit einer nach oben gerichteten Abkantung versehenen Kante 14 des Deckels 9 in Abhängigkeit von dessen Verschwenkstellung abgedeckt ist. Mit abnehmender, die Abdeckung 7 durchtretender Luftmenge pro Zeiteinheit und damit zunehmender Behälterfüllung senkt sich der Deckel, und die sichtbar werdende Länge des Peilstabes nimmt zu.

Eine auf dem Maximalwert hin zunehmende Behälterfüllung kann sich durch unsymmetrische Füllhöhe äußern, so daß die den Deckel treffende Luft an beiden Deckelseiten unterschiedlich drückt. Um auch dieses Anzeichen einer Behälterfüllung zum Maximum hin anzuzeigen, ist der Deckel so gebaut, daß er sich verwinden kann, d.h. bei einseitig überwiegender Luftdruckbeaufschlagung stellt sich die Kante 14 des Deckels 9 schräg zur Horizontalen ein.

Die Schwenkachse 10 bzw. die Lagerung des Deckels 9 an dieser ist derart getroffen, daß man den Deckel von Hand aus der Absenklage über 90° und gegebenenfalls noch weiter bis zur Abstützung an der Behälterwandung aufschwenken kann, so daß die siebförmige Abdeckung 7 zum Zwecke der Säuberung leicht zugänglich ist.

## Patentansprüche

1. Sammelbehälter (1) für Mäh-, Kehr- oder dergleichen durch ein Sauggebläse dem Behälterinneren zugeführtes Gut, insbesondere in Ausbildung als Aufsattelgerät oder Anhänger eines Zugfahrzeugs, vorzugsweise ausgebildet als Träger eines Mähgerätes, Kehrgerätes, Laub-Sauggerätes oder dergleichen Abfallgut aufnehmendes Pflegegerät, in welchen Behälter der Blasausgang des Sauggeblässes - vorzugsweise über einen etwa vertikal gerichteten Stutzen (5) in einen schräg verlaufenden vorderen Behälterwandungsabschnitt (4) - mündet und der einen siebförmig, beispielsweise lochblechförmig, abgedeckten Auslaß (3) für die von dem Sauggebläse in den Behälterinnenraum geförderte Luft aufweist, wobei der Auslaß (3) durch eine die nach oben weisende Behälterwandung (8) durchbrechende siebfömige Abdeckung (7) gebildet wird, die von einem außenseitig der Behälterwandung (8) schwenkbar angeordneten Deckel (9) übergriffen ist, dessen Schwenkachse (10) im Bereich der zugfahrzeugseitigen Berandung (11) der Abdeckung (7) angeordnet ist und der unter seinem Eigengewicht auf die Abdeckung (7) und unter dem Druck der durch die Abdeckung (7) austretenden Luft frei von der Abdeckung (7) fort verschwenkbar ist,
**dadurch gekennzeichnet,**
daß der Auslaß Ferner eine im Bereich der Rückwandung (2) des Behälters (1) befindliche Siebabdeckung (6) umfaßt.

2. Sammelbehälter nach Anspruch 1,
**dadurch gekennzeichnet,**
daß der Deckel (9) in seiner Absenklage auf der Abdeckung (7) eine - vorzugsweise schlitzförmige - Restöffnung (13) für den Durchlaß von die Abdeckung (7) durchtretender Luft aufweist.

3. Sammelbehälter nach Anspruch 2,
**dadurch gekennzeichnet,**
daß die Restöffnung (13) zwischen der dem Zugfahrzeug abgewandten Kante (14) des Deckels (9) und der oberen Behälterwandung (8) gebildet ist.

4. Sammelbehälter nach Anspruch 3,
**dadurch gekennzeichnet,**
daß der Deckel (9) in seinen etwa parallel zur Fahrtrichtung verlaufenden Seitenbereichen mit Stützkörpern (12) versehen ist, die der oberen Behälterwandung (8) zugewandt angeordnet sind und an dieser in der Absenklage des Deckels (9) in den seitlichen Nahbereichen der Abdeckungsberandung anliegen.

5. Sammelbehälter nach Anspruch 4,
**dadurch gekennzeichnet,**
daß die Stützkörper (12) etwa in Fahrtrichtung streifenförmig erstreckt und/oder federelastisch aus Gummi oder dergleichen elastischem Werkstoff ausgebildet sind und den Bereich zwischen der oberen Abdeckung (7) und dem in der Absenklage befindlichen Deckel (9) zu beiden Seiten hin gesehen abdichten.

6. Sammelbehälter nach einem der Ansprüche 1 bis 5,
**dadurch gekennzeichnet,**
daß an der oberen Behälterwandung (8) - vorzugsweise im in Fahrtrichtung verlaufenden Längsmittelbereich -ein Peilstab (16) nach oben abragend vorgesehen ist, demgegenüber die Verschwenkstellung des Deckels (9) vom Fahrersitz des Zugfahrzeugs gesehen beobachtbar ist.

7. Behälter nach Anspruch 6,
**dadurch gekennzeichnet,**
daß der Peilstab (16) in Fahrtrichtung hinter der dem Zugfahrzeug abgewandten Kante (14) des Deckels (9) angeordnet ist.

8. Sammelbehälter nach einem der Ansprüche 1 bis 7,
**dadurch gekennzeichnet,**
daß an der oberen Behälterwandung (8) parallel zu der der Schwenkachse (10) abgewandten Kante (14) des Deckels (9) und von dieser beabstandet ein Querholm (15) angeordnet ist, an dem vorzugsweise der Peilstab (16) festgelegt ist.

9. Sammelbehälter nach einem der Ansprüche 1 bis 8,
**dadurch gekennzeichnet,**
daß der Deckel (9) derart verwindbar ist, daß sich die der Schwenkachse (10) abgewandte Kante (14) aus der Parallellage zu dieser unter entsprechend in einem Seitenbereich überwiegendem Luftdruck schräg versetzt.

10. Sammelbehälter nach einem der Ansprüche 1 bis 9,
**dadurch gekennzeichnet,**
daß der Deckel (9) von Hand aus seiner Absenklage auf der Abdeckung (7) um über 90° hinaus verschwenkbar ist.

11. Sammelbehälter nach einem der Ansprüche 1 bis 10,
**dadurch gekennzeichnet,**
daß die Siebabdeckung (6) in dem an die nach oben weisende Behälterwandung (8) anschließenden Bereich der Rückwandung (2) des Behälters (1) angeordnet ist.

12. Sammelbehälter nach einem der Ansprüche 1 bis 11,
**dadurch gekennzeichnet,**
daß die Siebabdeckung (6) in der Rückwandung einer den Behälter (1) rückwärtig abschließenden Falle (2) angeordnet ist.

## Claims

1. Collecting container (1) for mowings, sweepings or similar material fed into the interior of the container through a suction fan, particularly in the form of a fifth-wheel device or a trailer for a tractor vehicle, preferably constructed as a carrier of a mowing machine, sweeping machine, vacuum leaf clearer or similar cleaning machine for picking up waste material, the blower outlet of the suction fan opening into said container, preferably through a substantially vertically directed nozzle (5) into a diagonally extending front container wall portion (4), said container having an outlet (3) covered by a grille, preferably in the form of a perforated metal sheet, for the air conveyed into the container by the suction fan, the outlet (3) being formed by a grille-like cover (7) which breaches the upwardly facing container wall (8), whilst over this cover (7) extends a lid (9) which is pivotally mounted outside the container wall (8) and the pivot axis (10) of which is arranged in the region of the edge (11) of the cover (7) at the tractor end and which can be swung onto the cover (7) under its own weight and can be swung away from the cover under the pressure of the air emerging through the cover (7), characterised in that the outlet further comprises a grille cover (6) located in the region of the back wall (2) of the container (1).

2. Collecting container according to claim 1, characterised in that, in its lowered position on the cover (7), the lid (9) has a preferably slot-shaped residual opening (13) to allow air to pass through from the cover (7).

3. Collecting container according to claim 2, characterised in that the residual opening (13) is formed between the edge (14) of the lid (9) remote from the tractor vehicle and the upper wall (8) of the container.

4. Collecting container according to claim 3, characterised in that the lid (9) is provided, in its side areas extending substantially parallel to the direction of travel, with support members (12) which face the upper wall (8) of the container and abut thereon, in the lowered position of the lid (9), in the near side areas of the edge of the cover.

5. Collecting container according to claim 4, characterised in that the support members extend as strips in the direction of travel and/or are resiliently springy, being made of rubber or similar elastic material, and seal off the region between the top cover (7) and the lid (9) in the lowered position, to both sides.

6. Collecting container according to one of claims 1 to 5, characterised in that, on the upper wall (8) of the container, preferably in the central longitudinal region running in the direction of travel, there is provided an upwardly projecting gauging rod (16) relative to which the pivoted position of the lid (9) can be observed from the driver's seat of the tractor vehicle.

7. Container according to claim 6, characterised in that the gauging rod (16) is mounted behind the edge (14) of the lid (9), remote from the tractor vehicle, in the direction of travel.

8. Collecting container according to one of claims 1 to 7, characterised in that, on the upper wall (8) of the container, parallel to the edge (14) of the lid remote from the pivot axis (10) and spaced therefrom, there is a transverse beam (15) to which the gauging rod (16) is preferably secured.

9. Collecting container according to one of claims 1 to 8, characterised in that the lid (9) can be twisted so that the edge (14) remote from the pivot axis (10) moves diagonally out of the parallel position thereto under an air pressure which is correspondingly predominant in a side area.

10. Collecting container according to one of claims 1 to 9, characterised in that the lid (9) can be pivoted by hand out of its lowered position on the cover (7) through more than 90°.

11. Collecting container according to one of claims 1 to 10, characterised in that the grille cover (6) is mounted in the area of the back wall (2) of the container (1) which adjoins the upward facing container wall (8).

12. Collecting container according to one of claims 1 to 11, characterised in that the grille cover (6) is mounted in the back wall of a trap (2) which closes off the container (1) to the rear.

## Revendications

1. Récipient servant à collecter des produits de broyage, de balayage ou analogues, amenés par aspiration à l'intérieur du récipient, notamment sous la forme d'appareil semi-porté ou remorqué par un véhicule, de préférence un véhicule d'entretien recueillant les déchets, d'un broyeur, d'un balai, d'un aspirateur de feuille ou appareil analogue qu'il porte, récipient dans lequel :
- à l'intérieur du récipient débouche la sortie du ventilateur d'aspiration, de préférence par l'intermédiaire d'une tubulure (5), à peu près verticale aboutissant à une partie de paroi du récipient (4) en pente montante vers l'avant,
- une sortie (3) masquée par une sorte de tamis, par exemple une tôle perforée, est offerte à l'air envoyé, par le ventilateur à l'intérieur du récipient,
- la sortie (3) est constituée par une garniture (7) en forme de tamis traversant la paroi (8) du récipient regardant vers le haut,
- la garniture (7) est enjambée par un couvercle (9) pouvant basculer à l'extérieur de la paroi du récipient (8), sur un axe (10) situé près du bord (11) de la garniture (7) situé du côté du véhicule,
- le couvercle (9) par son poids propre, vient se poser sur la garniture (7) tandis que la pression de l'air traversant la garniture (7) a pour effet de faire basculer le couvercle l'éloignant de la garniture,
caractérisé en ce que
la sortie (3) comprend également une garniture (6) en forme de tamis située dans la paroi arrière (2) du récipient (1).

2. Récipient selon la revendication 1,
caractérisé en ce que
le couvercle (9) dans sa position rabattue sur la garniture (7) présente une ouverture résiduelle (13), de préférence en forme de fente, permettant le passage de l'air traversant la garniture (7).

3. Récipient selon la revendication 2,
caractérisé en ce que
l'ouverture résiduelle (13) se trouve entre le bord (14) du couvercle (9) situé du côté opposé au véhicule, et la paroi supérieure (8) du récipient.

4. Récipient selon la revendication 3,
caractérisé en ce que
le couvercle (9) le long de ses bords latéraux sensiblement parallèles à la direction de déplacement du véhicule, est équipé d'éléments de soutien (12) dirigés vers la paroi supérieure (8) du récipient et en appui sur les zones latérales bordant la garniture, lorsque le couvercle (9) est en position rabattue.

5. Récipient selon la revendication 4,
caractérisé en ce que
les éléments de soutien (12) sont des bandes orientées selon la direction de déplacement du véhicule et/ou sont faites de caoutchouc ou d'un matériau élastique analogue, ces bandes assurant l'étanchéité des deux côtés, entre la garniture (7) et le couvercle (9) lorsqu'il est en position rabattue.

6. Récipient selon l'une des revendications 1 à 5,
caractérisé en ce qu'
il est prévu, sur la paroi supérieure (8) du récipient, de préférence dans la zone médiane s'étendant selon la direction de déplacement du véhicule, une tige de jaugeage (16), dépassant vers le haut, par rapport à laquelle il est possible d'observer, depuis le siège du conducteur, l'inclinaison du couvercle (9).

7. Récipient selon la revendication 6,
caractérisé en ce que
la tige de jaugeage (16) se trouve derrière le bord (14) du couvercle (9) le plus éloigné du véhicule, par rapport au sens de déplacement de celui-ci.

8. Récipient selon l'une des revendications 1 à 7,
caractérisé en ce que
sur la paroi supérieure (8) du récipient et parallèlement au bord (14) du couvercle (9) le plus éloigné de l'axe de basculement (10), il est prévu, à une certaine distance de ce bord (14) une traverse (15) sur laquelle est fixée de préférence la tige de jaugeage.

9. Récipient selon une des revendications 1 à 8,
caractérisé en ce que
le couvercle (9) est capable de se tordre de manière que son bord (14) le plus éloigné de l'axe de basculement (10) peut cesser d'être parallèle à cet axe en s'inclinant obliquement sous l'action d'une pression d'air dominante d'un côté.

10. Récipient selon une des revendications 1 à 9,
caractérisé en ce que
le couvercle (9) peut être basculé à la main de 90°, à partir de sa position rabattue sur la garniture (7).

11. Récipient selon une des revendications 1 à 10,
caractérisé en ce que
la garniture en forme de tamis (6) est située dans la partie de la paroi supérieure (8) du récipient faisant suite à la paroi arrière (2) du récipient (1).

12. Récipient selon une des revendications 1 à 11,
caractérisé en ce que
la garniture (6) se trouve dans la paroi arrière d'un piège (2) terminant le récipient (1) vers l'arrière.
